# EUROPEAN PATENT SPECIFICATION

(11) **EP 3 434 032 B1**
(45) Date of publication and mention of the grant of the patent: **25.09.2019**
(21) Application number: 16778311.7
(22) Date of filing: 03.10.2016
(51) Int. Cl.: H04W 4/06, H04W 68/02, H04W 68/10

(54) **PAGING OF A CLIENT NODE IN A GROUP COMMUNICATIONS SYSTEM**
FUNKRUF EINES CLIENT-KNOTENS IN EINEM GRUPPENKOMMUNIKATIONSSYSTEM
RADIOMESSAGERIE D'UN NOEUD CLIENT DANS UN SYSTÈME DE COMMUNICATIONS DE GROUPE

(30) Priority: 24.03.2016 US 201662312816 P
(43) Date of publication of application: 30.01.2019
(73) Proprietor: Telefonaktiebolaget LM Ericsson (PUBL), 164 83 Stockholm (SE)
(72) Inventor: TRÄNK, Magnus, 443 92 Lerum (SE); ÅKESSON, Joakim, 438 32 Landvetter (SE)
(74) Representative: Ericsson
(86) International application number: PCT/EP2016/073534
(87) International publication number: WO 2017/162314

(56) References cited:
- EP-A1- 1 213 939
- EP-A1- 1 435 751
- EP-A2- 1 565 026

## Description

### BACKGROUND

In communications networks, there may be a challenge to obtain good performance and capacity for a given communications protocol, its parameters and the physical environment in which the communications network is deployed.

An example of applications available in some communications system is group communications services. In general terms, group communication means that the same information or media is delivered to multiple client nodes. If many client nodes are located within the same area, multicast or broadcast based transmission using e.g., Multimedia Broadcast Multicast Services (MBMS) is efficient for communications to the group of client nodes, because communications resources such as time and frequency resources are shared among client nodes.

The traffic pattern of group communication such as Push-To-Talk (PTT) is typically sporadic with long period of silence (no media transmitted) and then precipitously several shorts bursts of data being transmitted between the group communication clients and server. Furthermore there are critical performance requirements for a call setup in group communication. These requirements are challenging to reach.

When a device (for example a wireless device) hosting a group communication client node experience periods of silence, the radio entity of the hosting device enters an idle mode. This means that no data can be received or transmitted over a unicast bearer until the device has returned to a connected mode, where the transmitter and receiver are active. In communications networks using idle mode and connected mode there is a paging mechanism with the objective to find and inform the device that there are data waiting to be sent to the device over a unicast bearer. The device receives and decodes the paging message and in the case the paging message is aimed for the device, it initiates the appropriate procedure to enter connected mode.

The device has to monitor whether the communications network is transmitting a paging message to it and this monitoring process consumes power (such as battery in the device). One way to save power consumption when in idle mode is to use discontinuous reception (DRX). According to DRX the communications network informs the device the exact timing on when paging messages are sent, and that the device only needs to start monitoring of paging messages at the in the in forehand signaled time period.

In the Third Generation Partnership Project (3GPP) Evolved Universal Terrestrial Radio Access Network (E-UTRAN) the shortest interval for the device to wake up and listen the paging message is 320 ms. The parameter is called defaultPagingCycle and is defined in 3GPP TS 36.331 v13.0.0. Network operators can apply a longer defaultPagingCycle, e.g. 1280 ms. The defaultPagingCycle is defined per cell, so all devices served in the same cell will use the same defaultPagingCycle.

In group communication system (e.g. Push to Talk system) the performance requirements for a call setup is typically <300 ms. With the paging method described above there could be server latency problems when communicating to new devices in a group call setup or even when transmitting group communication data after a period of silence, in which the receiving device has entered idle mode. For real time applications such as, but not limited to, PTT, this can impact the call setup and mouth-to-ear delay if the PTT system is using unicast transmission and some of the receiving client nodes are in idle mode. Potentially packets may also be dropped until the client nodes reach connected mode and re-establishes a radio bearer.

The document EP1213939 (NOKIA CORP [FI], 12 June 2002) discloses a scheme for paging wireless terminals in a group communications system. According to this document, any paging message meant for any given wireless terminal of the group is sent via a single Point to Multipoint transmission by a control node of the group communications system, using a dedicated paging channel.

Hence, there is still a need for an improved handling of real time critical services, such as PTT, in a group communications system.

### SUMMARY

An object of embodiments herein is to provide efficient handling of real time critical services, such as PTT, in a group communications system.

The scope of the invention is defined by the appended claims.

### BRIEF DESCRIPTION OF THE DRAWINGS

Aspects of the inventive concept are now described, by way of example, with reference to the accompanying drawings, in which:
Fig. 1 is a schematic diagram illustrating a communication network according to embodiments;
Fig. 2 is a signalling diagram according to prior art;
Figs. 3, 4, 5, and 6 are flowcharts of methods according to embodiments; and
Fig. 7 is a signalling diagram according to embodiments;
Fig. 8 is a schematic diagram showing functional units of a control node according to an embodiment;
Fig. 9 is a schematic diagram showing functional modules of a control node according to an embodiment;
Fig. 10 is a schematic diagram showing functional units of a client node according to an embodiment;
Fig. 11 is a schematic diagram showing functional modules of a client node according to an embodiment; and
Fig. 12 shows one example of a computer program product comprising computer readable means according to an embodiment.

### DETAILED DESCRIPTION

Aspects of the inventive concept will now be described more fully hereinafter with reference to the accompanying drawings, in which certain embodiments of the inventive concept are shown. Aspects of the inventive concept may, however, be embodied in many different forms and should not be construed as limited to the embodiments set forth herein; rather, these embodiments are provided by way of example so that this disclosure will be thorough and complete, and will help convey the scope of the inventive concept to those skilled in the art. Like numbers refer to like elements throughout the description. Any step or feature illustrated by dashed lines should be regarded as optional.

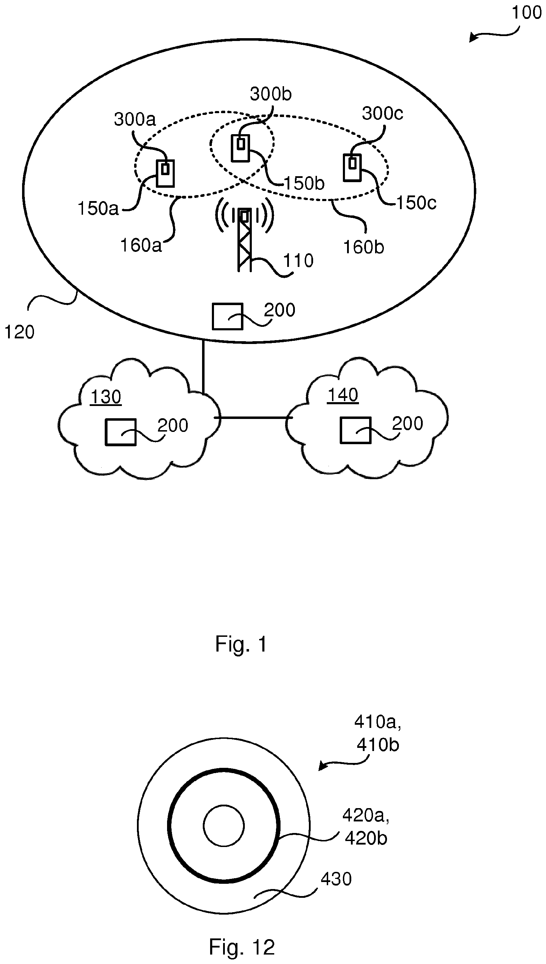

Fig. 1 is a schematic diagram illustrating a communications system 100 where embodiments presented herein can be applied. The communications system 100 is assumed to provide services for group communication and may hence be regarded as a group communications system. The group communications system 100 is, according to some aspects, a push to talk (PTT) system.

The communications system 100 comprises a radio access network 120, a core network 130, and a service network 140. Particularly, the communications system 100 comprises at least one control node 200 and at least one client node 300a, 300b, 300c. The at least one control node 200 may be provided in, or installed on, a radio access network node 110 or in another entity or device in the radio access network 120, in an entity or device of the core network 130, or in an entity or device of the service network 140. Each client node 300a, 300b, 300c may be provided in, or installed on, a respective wireless device 150a, 150b, 150c. Each client node 300a, 300b, 300c may be part of a group 160a, 160b of client nodes. In the illustrative example of Fig. 1, client nodes 300a, 300b are part of group 160a, and client nodes 300b, 300c are part of group 160b.

The radio access network 120 is operatively connected to the core network 130 which in turn is operatively connected to the service network 140. The radio access network node 110 thereby enables the wireless devices 150a, 150b, 150c, and hence the client nodes 300a, 300b, 300c, to access services and exchange data as provided by the service network 140.

Examples of wireless devices 150a, 150b, 150c include, but are not limited to, mobile stations, mobile phones, handsets, wireless local loop phones, user equipment (UE), smartphones, laptop computers, and tablet computers. Examples of radio access network nodes 110 include, but are not limited to, radio base stations, base transceiver stations, node Bs, evolved node Bs, access points, and access nodes. As the skilled person understands, the communications system 100 may comprise a plurality of radio access network nodes 110, each providing network access to a plurality of wireless devices 150a, 150b, 150c.

The herein disclosed embodiments are not limited to any particular number of radio access network nodes 110, client nodes 300a, 300b, 300c, or wireless devices 150a, 150b, 150a.

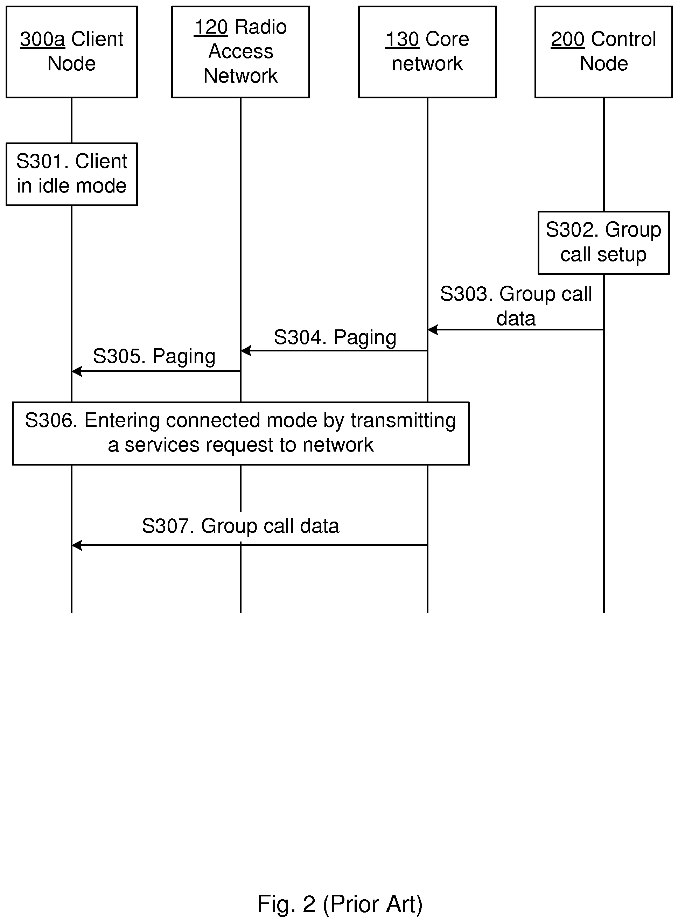

One example of a known paging procedure for paging a client node 300a in the group communications system 100 will now be disclosed in detail with reference to the signalling diagram of Fig. 2.

S301: The client node 300a is in idle mode.

S302: The control node 200 has data, such as Mobile Terminated (MT) data, to be delivered over unicast, an example of this is a group call setup.

S303: The control node 200 sends the data towards the client node 300 by sending the data to the core network 130.

S304: Since the client node 300a is in idle mode the core network 130 will initiate paging of the client node 300a in the radio access network 120.

S305: The radio access network 120 (by means of a radio access network node 100) transmits a paging message to the client node 300a.

The client node 300a receives the paging message after a time period. This time period may correspond to, or even be longer than, the default paging cycle (as e.g. defined by the parameter defaultPagingCycle in 3GPP TS 36.331 v13.0.0). The time period is longer than the default paging cycle if the first paging message is not correctly received (or correctly decoded) by the client node 300a or if there is not enough paging capacity to transmit the page message in the first next available paging cycle).

S306: Reception of the paging message initiates the client node 300a to enter connected mode by transmitting a service request to the communications network.

S307: When the client node 300a has successfully entered connected mode the data sent by the control node 200 can be forwarded from the core network 130 via the radio access network 120 to the client node 300a.

The paging procedure illustrated in Fig. 2 does easily add long delays when reaching a client node 300a in idle mode. The paging procedure adds in average half a default paging cycle to the call setup delay. Furthermore there is a risk that the paging capacity in one paging cycle is not enough for a group of client nodes, which means that some client nodes might be paged in the next available paging cycle which adds additional delay.

Embodiments disclosed herein relate to mechanisms for paging at least one client node 300a, 300b, 300c in a group communications system 100. In order to obtain such mechanisms there is provided a control node 200, a method performed by the control node 200, a computer program product comprising code, for example in the form of a computer program, that when run on processing circuitry of the control node 200, causes the control node 200 to perform the method.

Further embodiments disclosed herein relate to mechanisms for receiving paging in a group communications system 100. In order to obtain such mechanisms there is further provided a client node 300a, a method performed by the client node 300a, and a computer program product comprising code, for example in the form of a computer program, that when run on processing circuitry of the client node 300a, causes the client node 300a to perform the method.

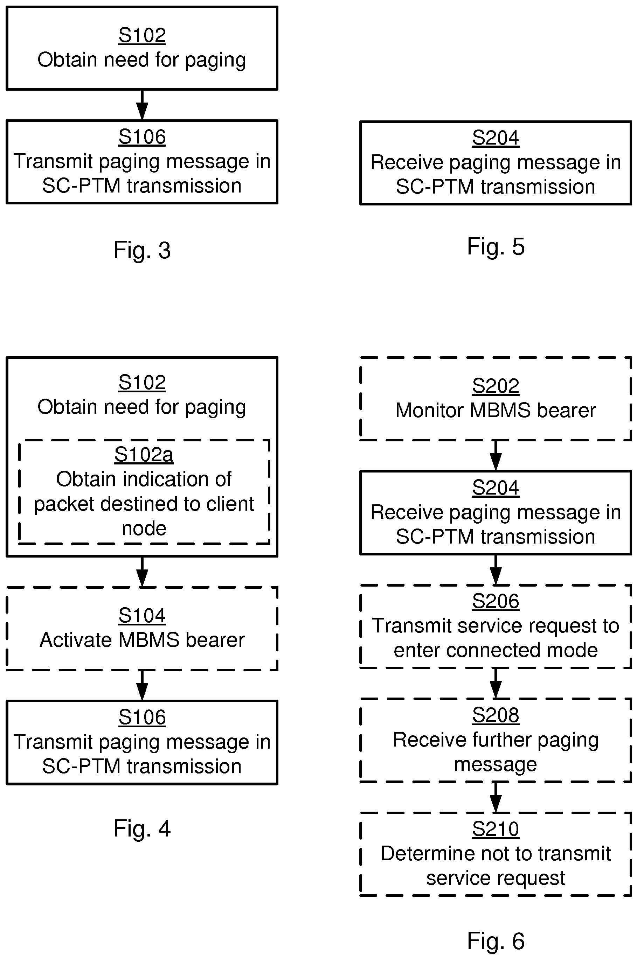

Figs. 3 and 4 are flow charts illustrating embodiments of methods for paging at least one client node 300a, 300b, 300c in the group communications system 100 as performed by the control node 200. Figs. 5 and 6 are flow charts illustrating embodiments of methods for receiving paging in a group communications system 100 as performed by the client node 300a. The methods are advantageously provided as computer programs.

The proposed paging mechanisms are based on utilizing a Single Cell Point to Multipoint (SC-PTM) transmission mode in MBMS to perform an early paging mechanism for unicast services. This can be achieved by using the very short activation and notification periods of SC-PTM.

The SC-PTM transmission mode was introduced in the Third Generation Partnership Project (3GPP) Evolved Universal Terrestrial Radio Access Network (E-UTRAN) Release 13 (Rel-13). For this transmission mode only one radio access network node 110 transmits the data. The group communication server is typically aware of where the client nodes 300a, 300b, 300c are located, and can therefore activate an MBMS bearer in just that cell served by this one radio access network node 110 where there is a need to broadcast data.

One benefit with using the SC-PTM transmission mode is the fast activation procedure in the radio access network 120; in SC-PTM there is a Single Cell-Multicast Control Channel (SC-MCCH) that can be transmitted every 20 ms and modified every 20 ms. This control channel informs the client nodes 300a, 300b, 300c in which radio frame the broadcasted data is being transmitted.

Reference is now made to Fig. 3 illustrating a method for paging at least one client node 300a, 300b, 300c in the group communications system 100 as performed by the control node 200 of the group communications system 100 according to an embodiment.

It is assumed that there is a need for paging the at least one client node 300a, 300b, 300c in the group communications system 100. The control node 200 is therefore configured to obtain such a need by performing step S102:
S102: The control node 200 obtains a need for paging the at least one client node 300a, 300b, 300c in the group communications system 100. Different ways for how the control node 200 can obtain this need for paging will be disclosed below.

In this respect the control node 200 can assume that, based on the control node's 200 current knowledge about ongoing communication to the client nodes 300a, 300b, 300c in the group communications system 100, there might be client nodes 300a, 300b, 300c in idle mode, and hence that need to be paged. For example, if there has been group call inactivity longer than a network defined inactivity timer the control node 200 can assume that at least some of the client nodes 300a, 300b, 300c may be in idle mode (if these client nodes 300a, 300b, 300c have not stayed in connected mode due to other traffic). In some aspects, the control node 200 itself may not explicitly be aware of whether the at least one client node 300a, 300b, 300c is in idle mode or in active mode. Whether the control node 200 is aware of whether the at least one client node 300a, 300b, 300c is in idle mode or in active mode generally depends on what protocol layer or in what protocol stack the functionality of the control node 200 is implemented at, and/or in what part of the group communications system 100 the functionality of the control node 200 is implemented. In some aspect the so-called need for paging can be regarded as a need for application level paging.

Transmission of the paging is based on SC-PTM transmission, thereby enabling the at least one client node 300a, 300b, 300c being paged to speed up its switch to connected mode, and thereby allowing the at least one client node 300a, 300b, 300c being paged to receive packets in a fast and efficient manner. Hence, the control node 200 is configured to transmit a paging message as in step S106:
S106: The control node 200 transmits a paging message for the at least one client node 300a, 300b, 300c. The paging message is transmitted in a SC-PTM transmission to the at least one client node 300a, 300b, 300c.

With increased number of client nodes 300a, 300b, 300c the benefit of the herein disclosed paging increases based on the limited paging cycle buffer.

Embodiments relating to further details of paging at least one client node 300a, 300b, 300c in the group communications system 100 will now be disclosed.

at least one client node 300a, 300b, 300c can be in idle mode when the paging message is transmitted. Hence, according to an embodiment the paging message is intended to be received by client nodes 300a, 300b, 300c in idle mode.

There can be different ways for the control node 200 to transmit the paging message in the SC-PTM transmission. According to an embodiment the paging message is transmitted on an MBMS bearer.

There may be different kinds of paging messages that can be transmitted in step S106. For example, the paging message could either be an individual paging message (for one of the client nodes 300a, 300b, 300c) or a group paging message (for a group 160a, 160b of client node 300a, 300b, 300c).

According to a first embodiment the paging message represents an individual paging message that is transmitted to the at least one client node 300a, 300b, 300c. The individual paging message, according to some aspects, therefore comprises an identifier of one of the at least one client node 300a, 300b, 300c.

According to a second embodiment the paging message is a group paging message. Thus, the paging message can represent one common group paging message. This common group paging message is transmitted to a group 160a, 160b of client nodes 300a, 300b, 300c. The group paging message, according to some aspects, therefore comprises an identifier of the group 160a, 160b of the at least one client node 300a, 300b, 300c.

Reference is now made to Fig. 4 illustrating methods for paging at least one client node 300a, 300b, 300c in the group communications system 100 as performed by the control node 200 of the group communications system 100 according to further embodiments. It is assumed that steps S102 and S106 are performed as described with reference to Fig. 3, and a repeated description of these steps is therefore omitted.

There may be different ways for the control node 200 to obtain the need for paging in step S102. According to an embodiment the control node 200 is configured to obtain the need as a result of a packet being destined for the at least one client node 300a, 300b, 300c, as in step S102a:
S102a: The control node 200 obtains an indication that at least one packet is destined for the at least one client node 300a, 300b, 300c. Step S102a may be performed in conjunction with, or as part of, step S102. This indication can be obtained from the node (such as another client node 300a, 300b, 300c,) or device from which the at least one packet is originating. Alternatively the indication can be obtained from another control node or from a management node of the communication network 100. According to an embodiment the paging message indicates that the at least one packet is to be transmitted to the at least one client node 300a, 300b, 300c over a unicast bearer.

As noted above, according to an embodiment the paging message is transmitted on an MBMS bearer. The control node 200 can therefore be configured to activating the MBMS bearer upon having obtained the need for paging the at least one client node 300a, 300b, 300c, as in step S104:
S104: The control node 200 activates the MBMS bearer in response to having obtained the indication.

Reference is now made to Fig. 5 illustrating a method for receiving paging in a group communications system 100 as performed by the client node 300a according to an embodiment.

As disclosed above with reference to Fig. 3 the control node 200 in step S106 transmits a paging message to the client node 300a. It is assumed that this paging message is received by the client node 300a. The client node 300a is therefore configured to perform step S204:
S204: The client node 300a receives a paging message for the client node 300a in an SC-PTM transmission from the control node 200 of the group communications system 100.

As disclosed above, the client node 300a can be in idle mode when the paging message is transmitted, and thus received by the client node 300a in step S204. Hence, according to an embodiment the client node 300a is in idle mode when receiving the paging message in step S204.

As further disclosed above, there may be different kinds of paging messages that can be transmitted in step S106, and thus received by the client node 300a in step S202. These embodiments thus apply also to the client node 300a.

According to a first embodiment the paging message is an individual paging message. Thus, the paging message can represent an individual paging message and comprise an individual identifier of the client node 300a.

According to a second embodiment the paging message is a group paging message. Thus, the paging message can represent one common group paging message and comprise a group identifier of a group 160a, 160b of client nodes 300a, 300b, 300c, and wherein the client node 300a is a member of that group 160a, 160b.

There may be different kinds of information comprised in the paging messages. For example, the paging message can indicate that at least one packet destined for the client node 300a is to be transmitted to the client node 300a over a unicast bearer. Additionally or alternatively, the paging message can indicates that the client node shall acquire a unicast radio bearer. The paging message, according to some aspects, thus serves as to wake up the client node 300a for packets that will be transmitted on unicast.

Reference is now made to Fig. 6 illustrating methods for receiving paging in a group communications system 100 as performed by the client node 300a according to further embodiments. It is assumed that step S204 is performed as described with reference to Fig. 5, and a repeated description of this step is therefore omitted.

The paging message could be sent over an MBMS bearer that the client node 300a is monitoring. The client node 300a can thus already be monitoring the MBMS bearer when receiving the paging message. Hence, according to an embodiment the client node 300a is configured to perform step S202:
S202: The client node 300a monitors the MBMS bearer prior to receiving the paging message.

Further, as noted above, the paging message can serve as to wake up the client node 300a, prompting the client node 300a to enter connected mode. Hence, according to an embodiment the client node 300a is configured to perform step S206:
S206: The client node 300a transmits a service request to enter connected mode upon having received the paging message in step S204.

The client device 300a may, in addition to the paging message received in step S204, receive further paging messages, and hence be configured to perform step S208:
S208: The client device 300a receives a further paging message for the client node 300a from the radio access network node 110 the radio access network of the group communications system.

However, alternatively, the client device 300a is configured to ignore such further paging messages upon having received the paging message in step S204, and hence be configured to perform step S210:
S208: The client device 300a determines, as a consequence of having entered connected mode, not to transmit a further service request to the radio access network node 110 of the radio access network 120.

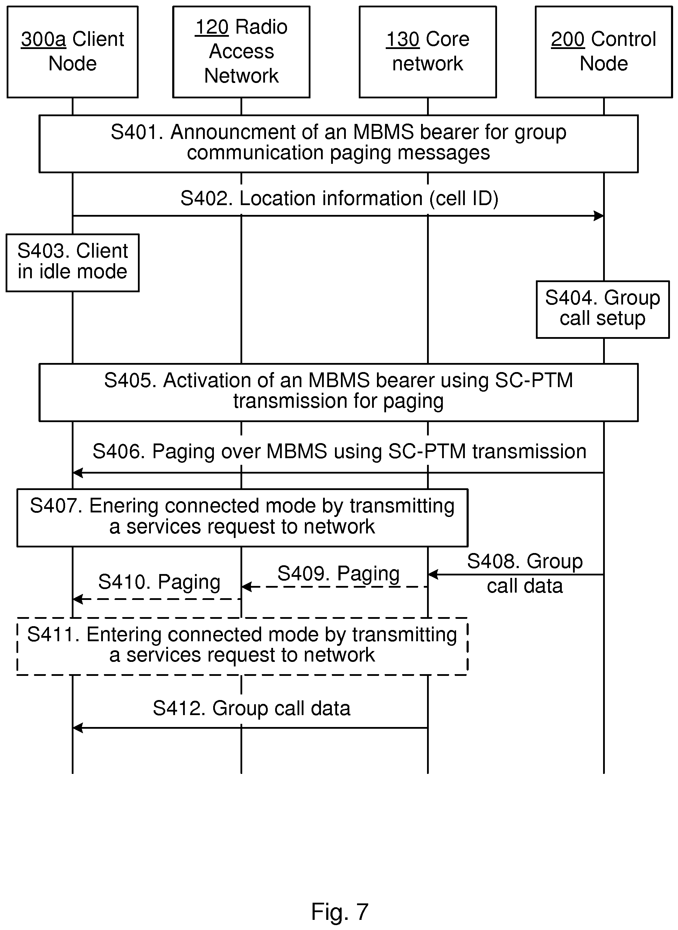

One particular embodiment for paging at least one client node 300a, 300b, 300c in a group communications system 100 and for receiving paging in a group communications system 100 based on at least some of the above disclosed embodiments will now be disclosed in detail with reference to the signalling diagram of Fig. 7.

S401: The control node 200 announces an MBMS bearer for group communication paging messages. This announcement allows the client ode 300a to be informed about the MBMS bearer that will be used for paging. The announcement includes announcement of a Temporary Mobile Group Identity (TMGI) that identifies the MBMS bearer.

S402: The client node 300 reports the cell identity of the cell in which the client node 300a is located. Step S402 can be repeated whenever the client node 300a moves between different cells.

S403: The client node 300a is in idle mode.

S404: The control node 200 has data, such as Mobile Terminated (MT) data, to be delivered over unicast, and therefore initiates a group call setup.

The control node 200 sends the data towards the client node 300 by sending the data to the core network 130 in step S408 (see below), and in parallel with step S408, the control node 200 performs step S405-S407:
S405: The control node 200 activates the MBMS bearer to be used for paging and with SC-PTM as transmission mode. The TMGI for this MBMS bearer is known by the client node 300a according to step S401. The activation of the MBMS bearer is performed only in the cell in which the client node 300a is located in, according to step S402. The procedure to setup (announce and activate) an MBMS bearer is defined in 3GPP TS 23.246 v13.3.0 and in 3GPP TS 26.346 v13.4.0.
S406: The control node 200 transmits a paging message on the newly activated MBMS bearer in SC-PTM as transmission to the client node 300a. Since this paging message will be broadcasted in the cell, it may include either the identifier of the client node 300a or the identifier of the group 160a of client nodes 300a, 300b of which the client node 300a belongs. Including the identifier of the group is beneficial if there are several client nodes belonging to a group that shall be paged. This is a typical scenario in group communication.
S407: Reception of the paging message initiates the client node 300a to enter connected mode by transmitting a service request to the communications network 100.
S408: The control node 200 sends the data towards the client node 300 by sending the data to the core network 130.

Steps S409-S411 represents the prior art paging procedure as illustrated in Fig. 2 and will be performed in parallel with step S405-S407.

S409: The core network 130 initiates paging of the client node 300a in the radio access network 120 in response to having received the data in step S408.

S410: The radio access network 120 (by means of a radio access network node 100) transmits a paging message to the client node 300a.

S411: Reception of the paging message initiates the client node 300a to enter connected mode by transmitting a service request to the communications network. Using the herein disclosed embodiments, step S407 is most likely completed before step S411 is entered, and hence step S411 can be skipped if the client node 300a has already successfully entered connected mode by completing step S407. Further, if steps S405-S407 are performed sufficiently fast such to allow the client node 300a to enter connected mode before step S409 is performed, then also at least some of steps S409-S411 (such as either all steps S409-S411, or steps S410-S411, or step S411) can be skipped.

S412: The data sent by the control node 200 is forwarded from the core network 130 via the radio access network 120 to the client node 300a.

As noted above, step S408 may be performed in parallel to steps S405-S407. If for any reason steps S405-S407 will be delayed or fail, the prior art procedure for paging (as defined by steps S409-S411) can be used.

As an alternative to step S404, consider a scenario where a first group 160a of client nodes is currently using MBMS resources in the group communications system 100 and that the control node 200 in near real time determines that a second group 160b of client nodes shall use the MBMS resource. If there are not sufficient MBMS resources to serve both groups over MBMS, one of the groups 160a, 160b must be moved to unicast transmission. Assume that there is a higher number of client nodes in the second group 160b than client nodes in the first group 160a. The control node 200 therefore determines the first group 160a of client nodes to be moved to unicast and therefore transmits a paging message to the first group 160a of client nodes. The control node 200 can thus page the first group 160a of client nodes and then (much faster than state of the prior art) move an ongoing group call of the first group 160a to unicast transmission to let the second group 160b of client nodes use the MBMS bearer for the new group call. As a result thereof, the first group 160a of client nodes is moved to unicast and hence the group call previously conducted on the MBMS bearer is now conducted on unicast.

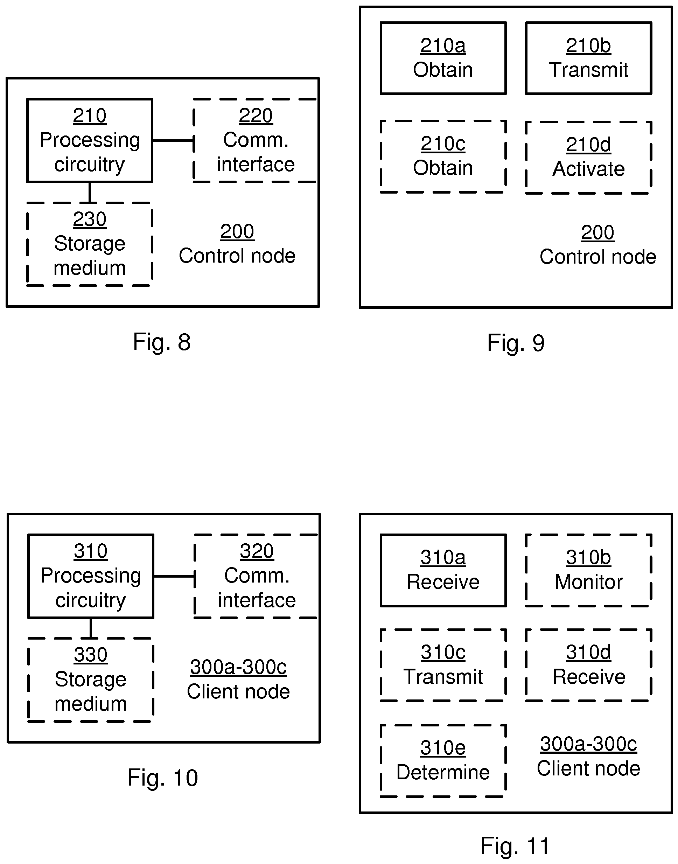

Fig. 8 schematically illustrates, in terms of a number of functional units, the components of a control node 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 410a (as in Fig. 12), e.g. in the form of a storage medium 230. The processing circuitry 210 may further be provided as at least one application specific integrated circuit (ASIC), or field programmable gate array (FPGA).

Particularly, the processing circuitry 210 is configured to cause the control node 200 to perform a set of operations, or steps, S102-S106, as disclosed above. For example, the storage medium 230 may store the set of operations, and the processing circuitry 210 may be configured to retrieve the set of operations from the storage medium 230 to cause the control node 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The control node 200 may further comprise a communications interface 220 for communications at least with a client node 300a, 300b, 300c. As such the communications interface 220 may comprise one or more transmitters and receivers, comprising analogue and digital components and a suitable number of antennas for wireless communications and ports for wireline communications.

The processing circuitry 210 controls the general operation of the control node 200 e.g. by sending data and control signals to the communications interface 220 and the storage medium 230, by receiving data and reports from the communications interface 220, and by retrieving data and instructions from the storage medium 230. Other components, as well as the related functionality, of the control node 200 are omitted in order not to obscure the concepts presented herein.

Fig. 9 schematically illustrates, in terms of a number of functional modules, the components of a control node 200 according to an embodiment. The control node 200 of Fig. 9 comprises a number of functional modules; an obtain module 210a configured to perform step S102, and a transmit module 210b configured to perform step S106. The control node 200 of Fig. 9 may further comprise a number of optional functional modules, such as an obtain module 210c configured to perform step S102a, and an activate module 210d configured to perform step S102. In general terms, each functional module 210a-210d may be implemented in hardware or in software. Preferably, one or more or all functional modules 210a-210d may be implemented by the processing circuitry 210, possibly in cooperation with functional units 220 and/or 230. The processing circuitry 210 may thus be arranged to from the storage medium 230 fetch instructions as provided by a functional module 210a-210d and to execute these instructions, thereby performing any steps of the control node 200 as disclosed herein.

The control node 200 may be provided as a standalone device or as a part of at least one further device. For example, the control node 200 may be provided in a node of the radio access network or in a node of the core network. Alternatively, functionality of the control node 200 may be distributed between at least two devices, or nodes. These at least two nodes, or devices, may either be part of the same network part (such as the radio access network or the core network) or may be spread between at least two such network parts. Some examples of where in the communications system 100 the control node 200 may be provided are illustrated in Fig. 1.

Functionality of the control node 200 may be implemented at the service layer of the protocol stack. In general terms, instructions that are required to be performed in real time may be performed in a device, or node, operatively closer to the radio access network than instructions that are not required to be performed in real time. In this respect, at least part of the control node 200 may reside in the radio access network, such as in the radio access network node, for cases when embodiments as disclosed herein are performed in real time.

Thus, a first portion of the instructions performed by the control node 200 may be executed in a first device, and a second portion of the of the instructions performed by the control node 200 may be executed in a second device; the herein disclosed embodiments are not limited to any particular number of devices on which the instructions performed by the control node 200 may be executed. Hence, the methods according to the herein disclosed embodiments are suitable to be performed by a control node 200 residing in a cloud computational environment. Therefore, although a single processing circuitry 210 is illustrated in Fig. 8 the processing circuitry 210 may be distributed among a plurality of devices, or nodes. The same applies to the functional modules 210a-210d of Fig. 9 and the computer program 420a of Fig. 12 (see below).

Fig. 10 schematically illustrates, in terms of a number of functional units, the components of a client node 300a according to an embodiment. Processing circuitry 310 is provided using any combination of one or more of a suitable central processing unit (CPU), multiprocessor, microcontroller, digital signal processor (DSP), etc., capable of executing software instructions stored in a computer program product 410b (as in Fig. 12), e.g. in the form of a storage medium 330. The processing circuitry 310 may further be provided as at least one application specific integrated circuit (ASIC), or field programmable gate array (FPGA).

Particularly, the processing circuitry 310 is configured to cause the client node 300a to perform a set of operations, or steps, S202-S210, as disclosed above. For example, the storage medium 330 may store the set of operations, and the processing circuitry 310 may be configured to retrieve the set of operations from the storage medium 330 to cause the client node 300a to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The client node 300a may further comprise a communications interface 320 for communications at least with a control node 200. As such the communications interface 320 may comprise one or more transmitters and receivers, comprising analogue and digital components and a suitable number of antennas for wireless communications and ports for wireline communications.

The processing circuitry 310 controls the general operation of the client node 300a e.g. by sending data and control signals to the communications interface 320 and the storage medium 330, by receiving data and reports from the communications interface 320, and by retrieving data and instructions from the storage medium 330. Other components, as well as the related functionality, of the client node 300a are omitted in order not to obscure the concepts presented herein.

Fig. 11 schematically illustrates, in terms of a number of functional modules, the components of a client node 300a according to an embodiment. The client node 300a of Fig. 11 comprises a receive module 310a configured to perform step S204. The client node 300a of Fig. 11 may further comprises a number of optional functional modules, such as any of a monitor module 310b configured to perform step S202, a transmit 310c configured to perform step S206, a receive module 310d configured to perform step S208, and a determine module 310e configured to perform step S210. In general terms, each functional module 310a-310e may be implemented in hardware or in software. Preferably, one or more or all functional modules 310a-310e may be implemented by the processing circuitry 310, possibly in cooperation with functional units 320 and/or 330. The processing circuitry 310 may thus be arranged to from the storage medium 330 fetch instructions as provided by a functional module 310a-310e and to execute these instructions, thereby performing any steps of the client node 300a as disclosed herein.

The client node 300a may be provided as a standalone device or as a part of at least one further device. For example, the client node 300a may be provided in a wireless device 150a. Hence, any processing circuitry, communications interface and storage medium of the wireless device 150a may be shared with the processing circuitry 310, the communications interface 320 and the storage medium 330 of the client node 300a. It is thus not necessary for the client node 300a to have its own processing circuitry 310, communications interface 320 and storage medium 330 as long as the processing circuitry, communications interface and storage medium of the wireless device 150a is configured to implement the functionality of the herein disclosed client node 300a.

Fig. 12 shows one example of a computer program product 410a, 410b comprising computer readable means 430. On this computer readable means 430, a computer program 420a can be stored, which computer program 420a can cause the processing circuitry 210 and thereto operatively coupled entities and devices, such as the communications interface 220 and the storage medium 230, to execute methods according to embodiments described herein. The computer program 420a and/or computer program product 410a may thus provide means for performing any steps of the control node 200 as herein disclosed. On this computer readable means 430, a computer program 420b can be stored, which computer program 420b can cause the processing circuitry 310 and thereto operatively coupled entities and devices, such as the communications interface 320 and the storage medium 330, to execute methods according to embodiments described herein. The computer program 420b and/or computer program product 410b may thus provide means for performing any steps of the client node 300a as herein disclosed.

In the example of Fig. 12, the computer program product 410a, 410b is illustrated as an optical disc, such as a CD (compact disc) or a DVD (digital versatile disc) or a Blu-Ray disc. The computer program product 410a, 410b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 420a, 420b is here schematically shown as a track on the depicted optical disk, the computer program 420a, 420b can be stored in any way which is suitable for the computer program product 410a, 410b. Aspects of the inventive concept have mainly been described above with reference to a few embodiments. However, as is readily appreciated by a person skilled in the art, other embodiments than the ones disclosed above are equally possible within the scope of the inventive concept, as defined by the appended claims.

## Claims

1. A method for paging at least one client node (300a, 300b, 300c) in a group communications system (100), the method being performed by a control node (200) of the group communications system (100), the method comprising:
obtaining (S102) a need for paging the at least one client node (300a, 300b, 300c) in the group communications system (100); and
transmitting (S106) a paging message for the at least one client node (300a, 300b, 300c) in a Single Cell Point To Multipoint, SC-PTM, transmission to the at least one client node (300a, 300b, 300c).

2. The method according to claim 1, wherein the paging message is transmitted on a Multimedia Broadcast Multicast Services (MBMS) bearer.

3. The method according to claim 1, wherein obtaining the need for paging comprises:
obtaining (S102a) an indication that at least one packet is destined for the at least one client node (300a, 300b, 300c).

4. The method according to claim 2 or 3, further comprising:
activating (S104) the MBMS bearer in response to having obtained the indication.

5. The method according to claim 3, wherein the paging message indicates that the at least one packet is to be transmitted to the at least one client node (300a, 300b, 300c) over a unicast bearer.

6. The method according to claim 1, wherein the paging message represents an individual paging message that is transmitted to the at least one client node (300a, 300b, 300c).

7. The method according to claim 6, wherein the individual paging message comprises an identifier of one of the at least one client node (300a, 300b, 300c).

8. The method according to claim 1, wherein the paging message represents one common group paging message that is transmitted to a group (160a, 160b) of client nodes (300a, 300b, 300c).

9. The method according to claim 8, wherein the group paging message comprises an identifier of the group (160a, 160b) of the at least one client node (300a, 300b, 300c).

10. The method according to claim 1, wherein the at least one client node (300a, 300b, 300c) is in idle mode when the paging message is transmitted.

11. A method for receiving paging in a group communications system (100), the method being performed by a client node (300a), the method comprising:
receiving (S204) a paging message for the client node (300a) in a Single Cell Point To Multipoint, SC-PTM, transmission from a control node (200) of the group communications system (100).

12. The method according to claim 11, wherein the client node (300a) is in idle mode when receiving the paging message.

13. The method according to claim 12, further comprising:
transmitting (S206) a service request to enter connected mode upon having received the paging message.

14. The method according to claim 11, further comprising:
receiving (S208) a further paging message for the client node (300a) from a radio access network node (110) of a radio access network (120) of the group communications system (100).

15. The method according to claims 13 and 14, further comprising:
determining (S210), as a consequence of having entered connected mode, not to transmit a further service request to the radio access network node (110) of the radio access network (120).

16. The method according to claim 11, wherein the paging message is received on a Multimedia Broadcast Multicast Services (MBMS) bearer.

17. The method according to claim 16, further comprising:
monitoring (S202) the MBMS bearer prior to receiving the paging message.

18. The method according to claim 11, wherein the paging message indicates that at least one packet destined for the client node (300s) is to be transmitted to the client node (300a) over a unicast bearer.

19. The method according to claim 11, wherein the paging message indicates that the client node (300a) shall acquire a unicast radio bearer by the client node (300a) transmitting a service request.

20. The method according to claim 11, wherein paging message comprises an individual identifier of the client node (300a).

21. The method according to claim 11, wherein the paging message comprises a group identifier of a group (160a, 160b) of client nodes (300a, 300b, 300c), and wherein the client node (300a) is a member of the group (160a, 160b).

22. A control node (200) for paging at least one client node (300a, 300b, 300c) in a group communications system (100), the control node (200) comprising processing circuitry (210), the processing circuitry being configured to cause the control node (200) to:
obtain a need for paging the at least one client node (300a, 300b, 300c) in the group communications system (100); and
transmit a paging message for the at least one client node (300a, 300b, 300c) in a Single Cell Point To Multipoint, SC-PTM, transmission to the at least one client node (300a, 300b, 300c).

23. A control node (200) for paging at least one client node (300a, 300b, 300c) in a group communications system (100), the control node (200) comprising:
processing circuitry (210); and
a computer program product (410a) storing instructions that, when executed by the processing circuitry (210), causes the control node (200) to:
obtain a need for paging the at least one client node (300a, 300b, 300c) in the group communications system (100); and
transmit a paging message for the at least one client node (300a, 300b, 300c) in a Single Cell Point To Multipoint, SC-PTM, transmission to the at least one client node (300a, 300b, 300c).

24. A control node (200) for paging at least one client node (300a, 300b, 300c) in a group communications system (100), the control node (200) comprising:
an obtain module (210a) configured to obtain a need for paging the at least one client node (300a, 300b, 300c) in the group communications system (100); and
a transmit module (210b) configured to transmit a paging message for the at least one client node (300a, 300b, 300c) in a Single Cell Point To Multipoint, SC-PTM, transmission to the at least one client node (300a, 300b, 300c).

25. A client node (300a) for receiving paging in a group communications system (100), the client node (300a) comprising processing circuitry (310), the processing circuitry being configured to cause the client node (300a) to:
receive a paging message for the client node (300a) in a Single Cell Point To Multipoint, SC-PTM, transmission from a control node (200) of the group communications system (100).

26. A client node (300a) for receiving paging in a group communications system (100), the client node (300a) comprising:
processing circuitry (310); and
a computer program product (410b) storing instructions that, when executed by the processing circuitry (310), causes the client node (300a) to:
receive a paging message for the client node (300a) in a Single Cell Point To Multipoint, SC-PTM, transmission from a control node (200) of the group communications system (100).

27. A client node (300a) for receiving paging in a group communications system (100), the client node (300a) comprising:
a receive module (310a) configured to receive a paging message for the client node (300a) in a Single Cell Point To Multipoint, SC-PTM, transmission from a control node (200) of the group communications system (100).

28. A computer program (420a) for paging at least one client node (300a, 300b, 300c) in a group communications system (100), the computer program comprising computer code which, when run on processing circuitry (210) of a control node (200), causes the control node (200) to:
obtain (S102) a need for paging the at least one client node (300a, 300b, 300c) in the group communications system (100); and
transmit (S104) a paging message for the at least one client node (300a, 300b, 300c) in a Single Cell Point To Multipoint, SC-PTM, transmission to the at least one client node (300a, 300b, 300c).

29. A computer program (420b) for receiving paging in a group communications system (100), the computer program comprising computer code which, when run on processing circuitry (310) of a client node (300a), causes the client node (300a) to:
receive (S204) a paging message for the client node (300a) in a Single Cell Point To Multipoint, SC-PTM, transmission from a control node (200) of the group communications system (100).

30. A computer program product (410a, 410b) comprising a computer program (420a, 420b) according to at least one of claims 28 and 29, and a computer readable storage medium (430) on which the computer program is stored.

## Patentansprüche

1. Verfahren für Funkrufe an mindestens einen Client-Knoten (300a, 300b, 300c) in einem Gruppenkommunikationssystem (100), wobei das Verfahren von einem Steuerknoten (200) des Gruppenkommunikationssystems (100) ausgeführt wird, wobei das Verfahren Folgendes umfasst:
Erhalten (S102) einer Notwendigkeit für Funkrufe an den mindesten einen Client-Knoten (300a, 300b, 300c) in dem Gruppenkommunikationssystem (100); und
Übertragen (S106) einer Funkrufnachricht für den mindestens einen Client-Knoten (300a, 300b, 300c) in einer Einzelzellenpunkt-zu-Mehrpunkt-Übertragung, SC-PTM-Übertragung, an den mindestens einen Client-Knoten (300a, 300b, 300c).

2. Verfahren nach Anspruch 1, wobei die Funkrufnachricht auf einem Träger von Multimedia-Broadcast/Multicast-Diensten (MBMS-Diensten) übertragen wird.

3. Verfahren nach Anspruch 1, wobei das Erhalten der Notwendigkeit eines Funkrufs umfasst:
Erhalten (S102a) eines Hinweises, dass mindestens ein Paket für den mindestens einen Client-Knoten (300a, 300b, 300c) bestimmt ist.

4. Verfahren nach Anspruch 2 oder 3, ferner umfassend:
Aktivieren (S104) des MBMS-Trägers als Reaktion auf das Erhalten der Angabe.

5. Verfahren nach Anspruch 3, wobei die Funkrufnachricht angibt, dass das mindestens eine Paket über einen Unicast-Träger an den mindestens einen Client-Knoten (300a, 300b, 300c) übertragen werden soll.

6. Verfahren nach Anspruch 1, wobei die Funkrufnachricht eine einzelne Funkrufnachricht darstellt, die an den mindestens einen Client-Knoten (300a, 300b, 300c) übertragen wird.

7. Verfahren nach Anspruch 6, wobei die einzelne Funkrufnachricht eine Kennung eines der mindestens einen Client-Knoten (300a, 300b, 300c) umfasst.

8. Verfahren nach Anspruch 1, wobei die Funkrufnachricht eine gemeinsame Gruppen-Funkrufnachricht darstellt, die an eine Gruppe (160a, 160b) von Client-Knoten (300a, 300b, 300c) übertragen wird.

9. Verfahren nach Anspruch 8, wobei die Gruppen-Funkrufnachricht eine Kennung der Gruppe (160a, 160b) des mindestens einen Client-Knotens (300a, 300b, 300c) umfasst.

10. Verfahren nach Anspruch 1, wobei sich der mindestens eine Client-Knoten (300a, 300b, 300c) im Ruhezustand befindet, wenn die Funkrufnachricht übertragen wird.

11. Verfahren zum Empfangen von Funkrufen in einem Gruppenkommunikationssystem (100), wobei das Verfahren von einem Client-Knoten (300a) ausgeführt wird, wobei das Verfahren Folgendes umfasst:
Empfangen (S204) einer Funkrufnachricht für den Client-Knoten (300a) in einer Einzelzellenpunkt-zu-Mehrpunkt-Übertragung, SC-PTM-Übertragung, von einem Steuerknoten (200) des Gruppenkommunikationssystems (100).

12. Verfahren nach Anspruch 11, wobei sich der Client-Knoten (300a) beim Empfangen der Funkrufnachricht im Ruhezustand befindet.

13. Verfahren nach Anspruch 12, ferner umfassend: Übertragen (S206) einer Dienstanforderung zum Eintritt in den verbundenen Modus, nachdem die Funkrufnachricht empfangen wurde.

14. Verfahren nach Anspruch 11, ferner umfassend:
Empfangen (S208) einer weiteren Funkrufnachricht für den Client-Knoten (300a) von einem Funkzugangsnetzknoten (110) eines Funkzugangsnetzes (120) des Gruppenkommunikationssystems (100).

15. Verfahren nach den Ansprüchen 13 und 14, ferner umfassend:
Bestimmen (S210), als Folge des Eintritts in den verbundenen Modus, keine weitere Dienstanforderung an den Funkzugangsnetzknoten (110) des Funkzugangsnetzes (120) zu übertragen.

16. Verfahren nach Anspruch 11, wobei die Funkrufnachricht auf einem Träger von Multimedia-Broadcast/Multicast-Diensten (MBMS-Diensten) empfangen wird.

17. Verfahren nach Anspruch 16, ferner umfassend: Überwachen (S202) des MBMS-Trägers vor dem Empfangen der Funkrufnachricht.

18. Verfahren nach Anspruch 11, wobei die Funkrufnachricht angibt, dass mindestens ein für den Client-Knoten (300s) bestimmtes Paket über einen Unicast-Träger an den Client-Knoten (300a) zu übertragen ist.

19. Verfahren nach Anspruch 11, wobei die Funkrufnachricht angibt, dass der Client-Knoten (300a) einen Unicast-Funkträger durch den Client-Knoten (300a) erheben soll, der eine Dienstanforderung sendet.

20. Verfahren nach Anspruch 11, wobei die Funkrufnachricht eine einzelne Kennung des Client-Knotens (300a) umfasst.

21. Verfahren nach Anspruch 11, wobei die Funkrufnachricht eine Gruppenkennung einer Gruppe (160a, 160b) von Client-Knoten (300a, 300b, 300c) umfasst und wobei der Client-Knoten (300a) ein Mitglied der Gruppe (160a, 160b) ist.

22. Steuerknoten (200) für Funkrufe an mindestens einen Client-Knoten (300a, 300b, 300c) in einem Gruppenkommunikationssystem (100), wobei der Steuerknoten (200) eine Verarbeitungsschaltung (210) umfasst, wobei die Verarbeitungsschaltung so konfiguriert ist, dass der Steuerknoten (200) veranlasst wird:
eine Notwendigkeit für Funkrufe an den mindestens einen Client-Knoten (300a, 300b, 300c) in dem Gruppenkommunikationssystem (100) zu erhalten; und
eine Funkrufnachricht für den mindestens einen Client-Knoten (300a, 300b, 300c) in einer Einzelzellenpunkt-zu-Mehrpunkt-Übertragung, SC-PTM-Übertragung, an den mindestens einen Client-Knoten (300a, 300b, 300c) zu übertragen.

23. Steuerknoten (200) für Funkrufe an mindestens einen Client-Knoten (300a, 300b, 300c) in einem Gruppenkommunikationssystem (100), wobei der Steuerknoten (200) Folgendes umfasst:
Verarbeitungsschaltung (210); und
ein Computerprogrammprodukt (410a), das Anweisungen speichert, die bei Ausführung durch die Verarbeitungsschaltung (210) den Steuerknoten (200) veranlasst:
eine Notwendigkeit für Funkrufe an den mindestens einen Client-Knoten (300a, 300b, 300c) in dem Gruppenkommunikationssystem (100) zu erhalten; und
eine Funkrufnachricht für den mindestens einen Client-Knoten (300a, 300b, 300c) in einer Einzelzellenpunkt-zu-Mehrpunkt-Übertragung, SC-PTM-Übertragung, an den mindestens einen Client-Knoten (300a, 300b, 300c) zu übertragen.

24. Steuerknoten (200) für Funkrufe an mindestens einen Client-Knoten (300a, 300b, 300c) in einem Gruppenkommunikationssystem (100), wobei der Steuerknoten (200) Folgendes umfasst:
ein Erhaltungsmodul (210a), das konfiguriert ist, um eine Notwendigkeit für Funkrufe an den mindesten einen Client-Knoten (300a, 300b, 300c) in dem Gruppenkommunikationssystem (100) zu erhalten; und
ein Übertragungsmodul (210b), das konfiguriert ist, um eine Funkrufnachricht für den mindestens einen Client-Knoten (300a, 300b, 300c) in einer Einzelzellenpunkt-zu-Mehrpunkt-Übertragung, SC-PTM-Übertragung, an den mindestens einen Client-Knoten (300a, 300b, 300c) zu übertragen.

25. Client-Knoten (300a) zum Empfangen von Funkrufen in einem Gruppenkommunikationssystem (100), wobei der Client-Knoten (300a) eine Verarbeitungsschaltung (310) umfasst, wobei die Verarbeitungsschaltung so konfiguriert ist, dass der Client-Knoten (300a) veranlasst wird:
eine Funkrufnachricht für den Client-Knoten (300a) in einer Einzelzellenpunkt-zu-Mehrpunkt-Übertragung, SC-PTM-Übertragung, von einem Steuerknoten (200) des Gruppenkommunikationssystems (100) zu empfangen.

26. Client-Knoten (300a) zum Empfangen von Funkrufen in einem Gruppenkommunikationssystem (100), wobei der Client-Knoten (300a) Folgendes umfasst:
Verarbeitungsschaltung (310); und
ein Computerprogrammprodukt (410b), das Anweisungen speichert, die bei Ausführung durch die Verarbeitungsschaltung (310) den Client-Knoten (300a) veranlasst:
eine Funkrufnachricht für den Client-Knoten (300a) in einer Einzelzellenpunkt-zu-Mehrpunkt-Übertragung, SC-PTM-Übertragung, von einem Steuerknoten (200) des Gruppenkommunikationssystems (100) zu empfangen.

27. Client-Knoten (300a) zum Empfangen von Funkrufen in einem Gruppenkommunikationssystem (100), wobei der Client-Knoten (300a) Folgendes umfasst:
ein Empfangsmodul (310a), das konfiguriert ist, um eine Funkrufnachricht für den Client-Knoten (300a) in einer Einzelzellenpunkt-zu-Mehrpunkt-Übertragung, SC-PTM-Übertragung, von einem Steuerknoten (200) des Gruppenkommunikationssystems (100) zu empfangen.

28. Computerprogramm (420a) für Funkrufe an mindestens einen Client-Knoten (300a, 300b, 300c) in einem Gruppenkommunikationssystem (100), wobei das Computerprogramm Computercode umfasst, der, wenn er auf einer Verarbeitungsschaltung (210) eines Steuerknotens (200) ausgeführt wird, den Steuerknoten (200) veranlasst:
eine Notwendigkeit für Funkrufe an den mindesten einen Client-Knoten (300a, 300b, 300c) in dem Gruppenkommunikationssystem (100) zu erhalten (S102); und
eine Funkrufnachricht für den mindestens einen Client-Knoten (300a, 300b, 300c) in einer Einzelzellenpunkt-zu-Mehrpunkt-Übertragung, SC-PTM-Übertragung, an den mindestens einen Client-Knoten (300a, 300b, 300c) zu übertragen (S104).

29. Computerprogramm (420b) zum Empfangen von Funkrufen in einem Gruppenkommunikationssystem (100), wobei das Computerprogramm Computercode umfasst, der, wenn er auf einer Verarbeitungsschaltung (310) eines Client-Knotens (300a) ausgeführt wird, den Client-Knoten (300a) veranlasst:
eine Funkrufnachricht für den Client-Knoten (300a) in einer Einzelzellenpunkt-zu-Mehrpunkt-Übertragung, SC-PTM-Übertragung, von einem Steuerknoten (200) des Gruppenkommunikationssystems (100) zu empfangen (S204).

30. Computerprogrammprodukt (410a, 410b), das ein Computerprogramm (420a, 420b) nach mindestens einem der Ansprüche 28 und 29 und ein computerlesbares Speichermedium (430) umfasst, auf dem das Computerprogramm gespeichert ist.

## Revendications

1. Procédé de radiomessagerie d'au moins un noeud client (300a, 300b, 300c) dans un système de communications de groupe (100), le procédé étant mis en oeuvre par un noeud de commande (200) du système de communications de groupe (100), le procédé comprenant :
l'obtention (S102) d'un besoin de radiomessagerie de l'au moins un noeud client (300a, 300b, 300c) dans le système de communications de groupe (100) ; et
la transmission (S106) d'un message de radiomessagerie pour l'au moins un noeud client (300a, 300b, 300c) dans une transmission point à multipoint de cellule unique, SC-PTM, vers l'au moins un noeud client (300a, 300b, 300c).

2. Procédé selon la revendication 1, dans lequel le message de radiomessagerie est transmis sur une porteuse de services de diffusion et multidiffusion multimédia (MBMS).

3. Procédé selon la revendication 1, dans lequel l'obtention du besoin de radiomessagerie comprend :
l'obtention (S102a) d'une indication indiquant qu'au moins un paquet est destiné à l'au moins un noeud client (300a, 300b, 300c) .

4. Procédé selon la revendication 2 ou 3, comprenant en outre : l'activation (S104) de la porteuse MBMS en réponse au fait d'avoir obtenu l'indication.

5. Procédé selon la revendication 3, dans lequel le message de radiomessagerie indique que l'au moins un paquet doit être transmis à l'au moins un noeud client (300a, 300b, 300c) sur une porteuse de monodiffusion.

6. Procédé selon la revendication 1, dans lequel le message de radiomessagerie représente un message de radiomessagerie individuel qui est transmis à l'au moins un noeud client (300a, 300b, 300c).

7. Procédé selon la revendication 6, dans lequel le message de radiomessagerie individuel comprend un identificateur de l'un parmi l'au moins un noeud client (300a, 300b, 300c).

8. Procédé selon la revendication 1, dans lequel le message de radiomessagerie représente un message de radiomessagerie de groupe commun qui est transmis à un groupe (160a, 160b) de noeuds clients (300a, 300b, 300c).

9. Procédé selon la revendication 8, dans lequel le message de radiomessagerie de groupe comprend un identificateur du groupe (160a, 160b) de l'au moins un noeud client (300a, 300b, 300c) .

10. Procédé selon la revendication 1, dans lequel l'au moins un noeud client (300a, 300b, 300c) est dans un mode inactif lorsque le message de radiomessagerie est transmis.

11. Procédé de réception de radiomessagerie dans un système de communications de groupe (100), le procédé étant mis en oeuvre par un noeud client (300a), le procédé comprenant :
la réception (S204) d'un message de radiomessagerie pour le noeud client (300a) dans une transmission point à multipoint de cellule unique, SC-PTM, depuis un noeud de commande (200) du système de communications de groupe (100).

12. Procédé selon la revendication 11, dans lequel le noeud client (300a) est dans un mode inactif lors de la réception du message de radiomessagerie.

13. Procédé selon la revendication 12, comprenant en outre : la transmission (S206) d'une demande de service pour entrer dans un mode connecté après avoir reçu le message de radiomessagerie.

14. Procédé selon la revendication 11, comprenant en outre :
la réception (S208) d'un autre message de radiomessagerie pour le noeud client (300a) depuis un noeud de réseau d'accès radio (110) d'un réseau d'accès radio (120) du système de communications de groupe (100).

15. Procédé selon les revendications 13 et 14, comprenant en outre : le fait de déterminer (S210), en conséquence d'être entré en mode connecté, de ne pas transmettre une autre demande de service au noeud de réseau d'accès radio (110) du réseau d'accès radio (120).

16. Procédé selon la revendication 11, dans lequel le message de radiomessagerie est reçu sur une porteuse de services de diffusion et multidiffusion multimédia (MBMS).

17. Procédé selon la revendication 16, comprenant en outre : la surveillance (S202) de la porteuse MBMS avant réception du message de radiomessagerie.

18. Procédé selon la revendication 11, dans lequel le message de radiomessagerie indique qu'au moins un paquet destiné au noeud client (300s) doit être transmis au noeud client (300a) sur une porteuse de monodiffusion.

19. Procédé selon la revendication 11, dans lequel le message de radiomessagerie indique que le noeud client (300a) va acquérir une porteuse radio de monodiffusion par le noeud client (300a) transmettant une demande de service.

20. Procédé selon la revendication 11, dans lequel le message de radiomessagerie comprend un identificateur individuel du noeud client (300a).

21. Procédé selon la revendication 11, dans lequel le message de radiomessagerie comprend un identificateur de groupe d'un groupe (160a, 160b) de noeuds clients (300a, 300b, 300c), et dans lequel le noeud client (300a) est un membre du groupe (160a, 160b).

22. Noeud de commande (200) de radiomessagerie d'au moins un noeud client (300a, 300b, 300c) dans un système de communications de groupe (100), le noeud de commande (200) comprenant un circuit de traitement (210), le circuit de traitement étant configuré pour amener le noeud de commande (200) à :
obtenir un besoin de radiomessagerie de l'au moins un noeud client (300a, 300b, 300c) dans le système de communications de groupe (100) ; et
transmettre un message de radiomessagerie pour l'au moins un noeud client (300a, 300b, 300c) dans une transmission point à multipoint de cellule unique, SC-PTM, vers l'au moins un noeud client (300a, 300b, 300c).

23. Noeud de commande (200) de radiomessagerie d'au moins un noeud client (300a, 300b, 300c) dans un système de communications de groupe (100), le noeud de commande (200) comprenant :
un circuit de traitement (210) ; et
un produit programme informatique (410a) stockant des instructions qui, lorsqu'elles sont exécutées par le circuit de traitement (210), amènent le noeud de commande (200) à :
obtenir un besoin de radiomessagerie de l'au moins un noeud client (300a, 300b, 300c) dans le système de communications de groupe (100) ; et
transmettre un message de radiomessagerie pour l'au moins un noeud client (300a, 300b, 300c) dans une transmission point à multipoint de cellule unique, SC-PTM, vers l'au moins un noeud client (300a, 300b, 300c).

24. Noeud de commande (200) de radiomessagerie d'au moins un noeud client (300a, 300b, 300c) dans un système de communications de groupe (100), le noeud de commande (200) comprenant :
un module d'obtention (210a) configuré pour obtenir un besoin de radiomessagerie de l'au moins un noeud client (300a, 300b, 300c) dans le système de communications de groupe (100) ; et
un module de transmission (210b) configuré pour transmettre un message de radiomessagerie pour l'au moins un noeud client (300a, 300b, 300c) dans une transmission point à multipoint de cellule unique, SC-PTM, vers l'au moins un noeud client (300a, 300b, 300c).

25. Noeud client (300a) pour recevoir une radiomessagerie dans un système de communications de groupe (100), le noeud client (300a) comprenant un circuit de traitement (310), le circuit de traitement étant configuré pour amener le noeud client (300a) à :
recevoir un message de radiomessagerie pour le noeud client (300a) dans une transmission point à multipoint de cellule unique, SC-PTM, depuis un noeud de commande (200) du système de communications de groupe (100).

26. Noeud client (300a) pour recevoir une radiomessagerie dans un système de communications de groupe (100), le noeud client (300a) comprenant :
un circuit de traitement (310) ; et
un produit programme informatique (410b) stockant des instructions qui, lorsqu'elles sont exécutées par le circuit de traitement (310), amènent le noeud client (300a) à :
recevoir un message de radiomessagerie pour le noeud client (300a) dans une transmission point à multipoint de cellule unique, SC-PTM, depuis un noeud de commande (200) du système de communications de groupe (100).

27. Noeud client (300a) pour recevoir une radiomessagerie dans un système de communications de groupe (100), le noeud client (300a) comprenant :
un module de réception (310a) configuré pour recevoir un message de radiomessagerie pour le noeud client (300a) dans une transmission point à multipoint de cellule unique, SC-PTM, depuis un noeud de commande (200) du système de communications de groupe (100).

28. Programme informatique (420a) de radiomessagerie d'au moins un noeud client (300a, 300b, 300c) dans un système de communications de groupe (100), le programme informatique comprenant un code informatique qui, lorsqu'il est exécuté sur un circuit de traitement (210) d'un noeud de commande (200), amène le noeud de commande (200) à :
obtenir (S102) un besoin de radiomessagerie de l'au moins un noeud client (300a, 300b, 300c) dans le système de communications de groupe (100) ; et
transmettre (S104) un message de radiomessagerie pour l'au moins un noeud client (300a, 300b, 300c) dans une transmission point à multipoint de cellule unique, SC-PTM, vers l'au moins un noeud client (300a, 300b, 300c).

29. Programme informatique (420b) pour recevoir une radiomessagerie dans un système de communications de groupe (100), le programme informatique comprenant un code informatique qui, lorsqu'il est exécuté sur un circuit de traitement (310) d'un noeud client (300a), amène le noeud client (300a) à :
recevoir (S204) un message de radiomessagerie pour le noeud client (300a) dans une transmission point à multipoint de cellule unique, SC-PTM, depuis un noeud de commande (200) du système de communications de groupe (100).

30. Produit programme informatique (410a, 410b) comprenant un programme informatique (420a, 420b) selon au moins l'une des revendications 28 et 29, et un support de stockage lisible par ordinateur (430) sur lequel est stocké le programme informatique.
